# EUROPEAN PATENT APPLICATION

(11) **EP 4 810 349 A1**
(43) Date of publication of application: **23.09.2026**
(21) Application number: 24905695.3
(22) Date of filing: 18.09.2024
(51) Int. Cl.: B62D 1/04, B62D 1/16, B62D 5/04, B62D 15/02

(54) **STEERING SYSTEM ASSEMBLY CAPABLE OF ADJUSTING NUMBER OF TURNS OF STEERING WHEEL**

(30) Priority: 19.12.2023 CN 202311754553
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LI, Fuhai, Ningbo, Zhejiang 315899 (CN); DING, Lei, Ningbo, Zhejiang 315899 (CN); LUO, Lixin, Ningbo, Zhejiang 315899 (CN); MA, Zuguo, Ningbo, Zhejiang 315899 (CN)
(74) Representative: Murgitroyd & Company
(86) International application number: PCT/CN2024/119309
(87) International publication number: WO 2025/130203

(57) **Abstract**

Provided is a steering system assembly capable of adjusting the number of turns of a steering wheel, comprising a shaft body (10) and a functional component mounted on the shaft body (10). The shaft body (10) is configured to be connected to a steering wheel, and can synchronously rotate in the axial direction with the steering wheel; the functional component comprises a follow-up portion and an axial movement portion (40) which are connected to the shaft body (10); the follow-up portion protrudes from the outermost side surface of the shaft body (10) in the radial direction, and synchronously rotates in the axial direction with the shaft body (10); the position of the follow-up portion is adjustable in at least one direction of the axial direction and the circumferential direction; the axial movement portion (40) is configured such that when the shaft body (10) rotates in the axial direction, the axial movement portion (40) moves close to or away from the follow-up portion in the axial direction; the axial movement portion (40) has a matching position relative to the shaft body (10); and when the axial movement portion (40) moves to the matching position, the axial movement portion (40) matches the follow-up portion, so that the shaft body (10) cannot continue rotating in the rotation direction. The steering system assembly has a simple structure, can adjust the number of turns of the steering wheel, limits the number of turns of the steering wheel, and has good applicability.

## Description

This application claims priority to Chinese Patent Application No. 202311754553.1, filed with the Chinese Patent Office on December 19, 2023 and entitled "STEERING SYSTEM ASSEMBLY CAPABLE OF ADJUSTING NUMBER OF TURNS OF STEERING WHEEL", which is incorporated herein by reference in its entirety.

### TECHNICAL FIELD

This application relates to the technical field of steering systems technologies, and in particular, to a steering system assembly with adjustable steering wheel turns.

### BACKGROUND

A steer-by-wire system refers to a steering system that eliminates mechanical connection structures, reducing system complexity and improving system response speed. However, due to the lack of mechanical constraints on the steering wheel, when the vehicle is not powered on, the steering wheel can rotate without turn limit, posing significant safety hazards to the vehicle.

Therefore, in the prior art, mechanical structures have been introduced into steer-by-wire systems to limit the number of steering wheel turns. However, due to the limited internal space of vehicles, existing mechanical structures for turn limitation are relatively complex, cumbersome to install, and have poor maintainability, increasing subsequent maintenance costs. Moreover, as vehicle models and specifications vary, the requirements and settings of their steering systems also differ, and the steering wheel turn settings are different. Existing steering systems cannot adjust the number of steering wheel turns, which has certain limitations.

### SUMMARY

In view of this, an objective of this application is to provide a steering system assembly with adjustable steering wheel turns, which can limit the number of steering wheel turns and adjust the number of steering wheel turns according to actual needs. It has a simple structure, is easy to arrange and maintain, and has good applicability.

An embodiment of this application provides a steering system assembly with adjustable steering wheel turns, including a shaft body and a functional assembly mounted on the shaft body. The shaft body is configured to connect to the steering wheel and can rotate synchronously with the steering wheel about an axial direction. The functional assembly includes a follower portion and an axial moving portion connected to the shaft body. The follower portion protrudes from an outermost radial surface of the shaft body and rotates synchronously with the shaft body about the axial direction. The position of the follower portion is adjustable in at least one of the axial direction and the circumferential direction. The axial moving portion is configured such that when the shaft body rotates about the axial direction, the axial moving portion moves axially towards or away from the follower portion. The axial moving portion has a mating position relative to the shaft body. When the axial moving portion moves to the mating position, it cooperates with the follower portion to prevent the shaft body from continuing to rotate in a rotation direction.

In one embodiment, the follower portion includes a first limiting member and a second limiting member. The first limiting member and the second limiting member are mounted on the shaft body at axial intervals. At least one of the first limiting member and the second limiting member is configured to be movably connected to the shaft body, so that the position of at least one of the first limiting member and the second limiting member is adjustable relative to the shaft body. The axial moving portion is located between the first limiting member and the second limiting member.

In one embodiment, the shaft body includes a second mandrel. The second mandrel includes a first functional section, a second functional section, and a section. The transmission section is located between the first functional section and the second functional section and is axially connected to the first functional section and the second functional section. The first limiting member is mounted on the first functional section. The second limiting member is mounted on the second functional section. The axial moving portion is mounted on the transmission section.

In one embodiment, the first limiting member includes a first adjusting member and a first clamping member. The first adjusting member is axially provided with an adjustment slot. The first functional section is at least partially disposed in the adjustment slot. The first clamping member is located on the outermost radial surface of the first adjusting member.

In one embodiment, an inner wall of the adjustment slot is provided with threads. An outermost radial surface of the first functional section is provided with threads that cooperating with the adjustment slot. The first adjusting member is threadedly connected to the first functional section.

In one embodiment, one of the inner wall of the adjustment slot and the outermost radial surface of the first functional section provided with a protruding positioning rib, and the other is provided with a positioning groove. The positioning rib is disposed in the positioning groove.

In one embodiment, the second limiting member includes a second adjusting member and a second clamping member. The second adjusting member is axially provided with an adjustment slot cooperating with the second functional section. The second functional section is at least partially disposed in the adjustment slot. The second clamping member is located on an outermost radial surface of the second adjusting member. The adjustment slot of the second adjusting member is threadedly connected to the second functional section, or, one of the inner wall of the adjustment slot of the second adjusting member and an outermost radial surface of the second functional section is provided with a protruding positioning rib, and the other is provided with a positioning groove.

In one embodiment, the axial moving portion includes a connection seat, a first blocking member, and a second blocking member. The connection seat is movably connected to the transmission section and the connection seat move axially relative to the transmission section. The first blocking member is located at an end of the connection seat near the first limiting member. The second blocking member is located at an end of the connection seat near the second limiting member.

In one embodiment, the axial moving portion includes a reinforcement member. The first blocking member and the second blocking member are connected by the reinforcement member. The connection seat is provided with a mounting slot cooperating with the reinforcement member. The reinforcement member is detachably disposed in the mounting slot. The first blocking member and the second blocking member are exposed outside the mounting slot and protrude beyond the two axial ends of the connection seat.

In one embodiment, an outer surface of the shaft body is sleeved with a housing. The housing includes a functional cavity and a fixed cavity. The shaft body is disposed in the functional cavity. The fixed cavity communicates with the functional cavity and the fixed cavity penetrates a radial side surface of the housing. The axial moving portion includes a fixing member located in the fixed cavity. The fixing member is connected to the housing. The connection seat is capable of moving move axially relative to the fixing member. The fixing member is configured to make the connection seat contact with the transmission section.

In one embodiment, one of the fixing member and the connection seat protrudes with a guide strip, and the other is provided with a guide groove. The guide strip cooperates with the guide groove to allow the connection seat to move axially relative to the fixing member.

In one embodiment, the axial moving portion further includes a cover and a fastener. The cover is located at an end of the fixing member away from the connection seat. The cover and the fixing member are provided with fastener holes cooperating with the fastener.

In one embodiment, the axial moving portion includes an elastic member. The elastic member is located between the cover and the fixing member. The elastic member is configured to apply force to the fixing member and the connection seat to keep the connection seat in contact with the transmission section.

In one embodiment, an end of the fastener extends through the fixing member and contacts at least one of the first clamping member and the second clamping member of the follower portion.

The beneficial effects of this application are as follows:
The functional assembly cooperates with the shaft body to limit the rotation of the shaft body, thereby limiting the number of turns of the steering wheel connected to the shaft body.

The functional assembly includes a follower portion and an axial moving portion. The follower portion rotates synchronously with the shaft body. The axial moving portion cooperates with the shaft body to move axially relative to the shaft body. When the axial moving portion moves to cooperate with the follower portion, a limit position in a circumferential direction can be performed on the follower portion, preventing the follower portion from continuing to rotate in a same direction with the shaft body, thereby limiting the steering wheel. At this time, the steering wheel rotates to a limit position. Through the cooperation of mechanical structures, the rotation of the shaft body can be cleverly utilized to achieve the cooperative relationship between the follower portion and the axial moving portion. The structure is simple and occupation space is not relatively large, facilitating arrangement.

The position of the follower portion is adjustable in the axial and/or circumferential direction, which can change the number of turns of the shaft body when the follower portion cooperates with the axial moving portion, thereby adjusting the number of steering wheel turns. It can be adapted to different vehicle models and steering wheel requirements. The adjustment operation is simple and has good applicability.

### BRIEF DESCRIPTION OF DRAWINGS

To describe the technical solutions in the embodiments of this application more clearly, the following briefly introduces the accompanying drawings required for describing the embodiments. It should be understood that the following drawings show only some embodiments of this application and therefore should not be considered as a limitation on a scope. A person of ordinary skill in the art may still derive other related drawings from these accompanying drawings without creative efforts.
FIG. 1 is a schematic diagram of an overall structure according to an embodiment of this application.
FIG. 2 is a schematic diagram of a housing of an overall structure according to an embodiment of this application.
FIG. 3 is a cross-sectional view of an overall structure according to an embodiment of this application.
FIG. 4 is an exploded view of the follower portion and the second mandrel according to an embodiment of this application.
FIG. 5 is a schematic structural diagram of a steering wheel at a first limit position according to an embodiment of this application.
FIG. 6 is a schematic structural diagram of a steering wheel at a second limit position according to an embodiment of this application.
FIG. 7 is an exploded view of a follower portion and a second mandrel according to another embodiment of this application.
FIG. 8 is a partially exploded schematic diagram of an axial moving portion according to an embodiment of this application.
FIG. 9 is a schematic structural diagram of an axial moving portion cooperating with a second mandrel according to an embodiment of this application.

In the drawings:
10 - shaft body; 101 - connection shaft; 11 - first mandrel; 111 - connection key; 112 - installation gap; 113 - adjustment gap; 12 - second mandrel; 121 - first functional section; 1211 - positioning groove; 122 - second functional section; 123 - transmission section;
20 - first limiting member; 21 - first adjusting member; 211 - adjustment slot; 212 - positioning rib; 22 - first clamping member; 221 - sliding slot; 222 - first arcuate member; 223 - side stop; 23 - mating part;
30 - second limiting member; 31 - second adjusting member; 32 - second clamping member;
40 - axial moving portion; 41 - connection seat; 411 - mounting slot; 412 - limiting groove; 413 - guide groove; 42 - first blocking member; 421 - second arcuate member; 43 - second blocking member; 44 - reinforcement member; 441 - connection member; 45 - fixing member; 451 - guide strip; 46 - cover; 47 - fastener; 48 - elastic member;
50 - housing; 51 - functional cavity; 52 - fixed cavity.

### DESCRIPTION OF EMBODIMENTS

The following describes the specific embodiments of this application in detail with reference to the accompanying drawings. Apparently, the described embodiments are only a part rather than all of the embodiments of this application. Based on the description in this application, all other embodiments obtained by a person of ordinary skill in the art based on the embodiments of this application fall within the protection scope of this application.

Unless otherwise clearly specified and defined, terms such as "set", " mount", and "connect" should be understood broadly. For example, they can be fixed connections, detachable connections, or integral connections; they can be mechanical connections or electrical connections; they can be direct connections or indirect connections through an intermediate medium. A person of ordinary skill in the art may understand a specific meaning of the foregoing term in a specific case.

Terms such as "upper", "lower", "left", "right", "front", "rear", "top", "bottom", "inner", and "outer" indicate orientations or positional relationships based on the orientations or positional relationships shown in the drawings, or the customary orientations or positional relationships when the product of this application is used. They are only for the convenience of describing and simplifying the description, and do not indicate or imply that the device or element referred to must have a specific orientation or be constructed and operated in a specific orientation. Therefore, they should not be construed as limitations on this application.

Terms such as "first", "second", and "third" are only used to distinguish elements with similar properties and do not indicate or imply relative importance or a specific order.

The term "include", "comprise", or any other variation thereof is intended to cover nonexclusive inclusion, in addition to those elements listed, and may contain elements not expressly listed.

With the development of technology, steer-by-wire technology has been added to the steering systems. A steer-by-wire system refers to a steering system that eliminates mechanical connection structures, reducing system complexity and improving system response speed.

However, because the steer-by-wire system lack mechanical constraints on the steering wheel, when the vehicle is not powered on, the steering wheel can rotate arbitrarily, posing significant safety hazards to the vehicle. For example, arbitrary rotation of the steering wheel may damage the clock spring inside the steering wheel, causing problems such as the horn not sounding, airbag alarms, and steering wheel button failures. Another example is that if the steering wheel rotates arbitrarily and the number of steering wheel turns is not limited, exceeding the steering column angle signal range, it may also cause the steering wheel to fail to return to the center position after power-on, posing significant safety hazards to vehicle driving. Therefore, in the prior art, mechanical structures have been introduced into the steer-by-wire system to limit the number of steering wheel turns.

Due to a limited internal space of a vehicle, existing turn limitation structure is relatively complex, cumbersome to mount, and have poor maintainability, increasing subsequent maintenance costs. Moreover, as vehicle models and specifications vary, the requirements and settings of their steering systems also differ, and the steering wheel turn settings are different. Existing steering system cannot adjust the number of steering wheel turns, which has certain limitations.

To address the above problems, an embodiment of this application provides a steering system assembly with adjustable steering wheel turns, which will be described in detail below with reference to the accompanying drawings.

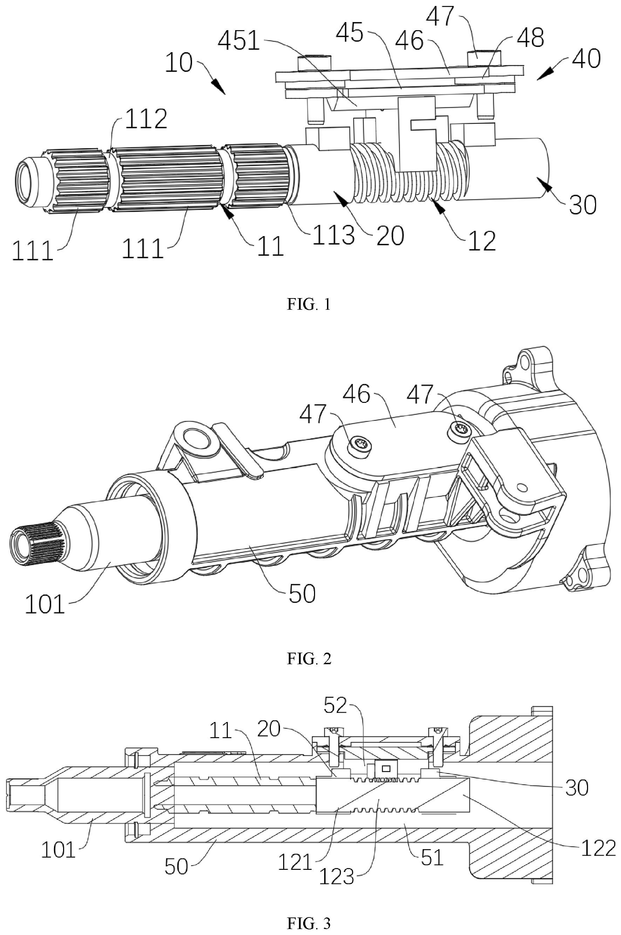

As shown in FIG. 1, the steering system assembly with adjustable steering wheel turns proposed in this application includes a shaft body 10 and a functional assembly mounted on the shaft body 10. The shaft body 10 is configured to connect to the steering wheel and can rotate synchronously with the steering wheel about the axial direction. When the driver turns the steering wheel, the shaft body 10 rotates synchronously with the steering wheel.

The functional assembly includes a follower portion and an axial moving portion 40. Both the follower portion and the axial moving portion 40 are connected to the shaft body 10. The follower portion protrudes from the outermost radial surface of the shaft body 10, forming a protrusion on the shaft body 10 at the follower portion. This protrusion creates a position of abrupt change in the radial dimension of the shaft body 10. The follower portion can rotate synchronously with the shaft body 10 around the axial direction, causing the circumferential position of the protrusion to change with rotation. If the position of the protrusion relative to the steering wheel when the steering wheel is in the center position is defined as the zero point position, during the rotation of the steering wheel and the shaft body 10, the position of the protrusion changes circumferentially relative to the zero point position. When the shaft body 10 rotates one turn, the protrusion returns to the zero point position.

The follower portion is configured such that its position relative to the shaft body 10 is adjustable in at least one of the axial direction and the circumferential direction, allowing the zero point position of the protrusion to potentially change axially, thereby making the number of steering wheel turns adjustable.

The axial moving portion 40 is mounted on the outermost radial surface of the shaft body 10 and can, when the shaft body 10 rotates, maintain a constant circumferential position while moving only axially. As the shaft body 10 rotates circumferentially, the axial moving portion 40 can move towards or away from the follower portion. The axial moving portion 40 has a mating position relative to the shaft body 10 in the axial direction. When the axial moving portion 40 moves to the mating position, it can cooperate with the follower portion to limit the follower portion, preventing the shaft body 10 from continuing to rotate in the rotation direction.

In one embodiment of this application, as shown in FIG. 1, the follower portion includes a first limiting member 20 and a second limiting member 30. The first limiting member 20 and the second limiting member 30 are mounted on the shaft body 10 at axial intervals. At least one of the first limiting member 20 and the second limiting member 30 is configured to be movably connected to the shaft body 10, so that the position of at least one of the first limiting member 20 and the second limiting member 30 relative to the shaft body 10 is adjustable. The axial moving portion 40 is located between the first limiting member 20 and the second limiting member 30 and can, driven by the shaft body 10, move axially towards the first limiting member 20 or towards the second limiting member 30.

For ease of understanding, the aforementioned movably connected means that when it is necessary to change the position of at least one of the first limiting member 20 and the second limiting member 30 on the shaft body 10, at least one of the first limiting member 20 and the second limiting member 30 can be adjusted, having the possibility and feasibility of position adjustment. When its position does not need to be changed, it has a fixed position relative to the shaft body 10.

By adjusting the position of the first limiting member 20 and/or the second limiting member 30 relative to the shaft body 10, the position where the axial moving portion 40 cooperates with the follower portion for limitation can be adjusted, thereby adjusting the axial travel of the axial moving portion 40. This can adjust the number of turns of the shaft body 10, thereby adjusting the limit number of steering wheel turns. It can be adapted to the needs of different vehicles and is applicable to test scenarios such as driving simulators or feel simulators, having good application prospects and strong applicability.

When the axial moving portion 40 moves axially to cooperate with the first limiting member 20, the steering wheel cannot continue to rotate in the same direction. At this time, the steering wheel rotates to the first limit position. When the axial moving portion 40 moves axially to cooperate with the second limiting member 30, the steering wheel cannot continue to rotate in the same direction. At this time, the steering wheel rotates to the second limit position. The cooperation between the follower portion and the axial moving portion 40 can limit the number of steering wheel turns, preventing the steering wheel from rotating without limit and exceeding the range of the angle sensor, avoiding the problem that the steering wheel cannot return to the center position, and ensuring the safety of vehicle driving.

In one embodiment of this application, referring to FIG. 1 and FIG. 2, the shaft body 10 is connected to the steering wheel through a connection shaft 101, and the connection shaft 101 can move axially relative to the shaft body 10, allowing the steering wheel to have the possibility of adjusting its position axially. The connection shaft 101 cooperates with the shaft body 10 to provide the steering wheel with an axial adjustment range. The axial height of the steering wheel can be adjusted according to the driver's needs, improving the driver's driving experience.

As shown in FIG. 1, the shaft body 10 includes a first mandrel 11. One end of the first mandrel 11 is connected to the steering wheel through the connection shaft 101.

For example, as shown in FIG. 1, the outermost radial surface of the first mandrel 11 protrudes with a connection key 111. The connection key 111 protrudes radially and extends axially. One end of the connection shaft 101 close to the shaft body 10 is provided with a connection groove. The connection groove cooperates with the first mandrel 11. At least a part of the first mandrel 11 is disposed in the connection groove. The wall of the connection groove is provided with a slot that cooperates with the connection key 111. The connection key 111 is disposed in the slot to achieve the connection between the connection shaft 101 and the first mandrel 11. The connection key 111 can slide axially in the slot to adjust the axial position of the steering wheel.

Optionally, the connection key 111 and the slot have an interference fit. This arrangement facilitates the connection between the connection shaft 101 and the first mandrel 11 and ensures synchronous transmission between the connection shaft 101 and the first mandrel 11. When the steering wheel is adjusted axially, it can have a certain damping, making it easy for the steering wheel to stay at an appropriate axial position. The adjustment is simple and convenient.

Optionally, as shown in FIG. 1, several connection keys 111 are distributed circumferentially on an outermost radial surface of the first mandrel 11. This arrangement ensures connection stability and firmness, and ensures the stability and consistency of the axial adjustment of the steering wheel, preventing the steering wheel from tilting or shaking during the adjustment process, eliminating the need for fine-tuning the steering wheel, and making the operation simple and convenient.

Optionally, as shown in FIG. 1, a plurality of connection keys 111 are distributed at intervals along the axial direction on the radially outermost surface of the first mandrel 11, so that an installation gap 112 is formed between two axially adjacent connection keys 111 on the first mandrel 11. By providing the installation gap 112, the contact area between the connection keys 111 and the slot can be reduced to some extent, facilitating the entry of the connection keys 111 into the slot. This avoids installation difficulties caused by excessive axial length of the connection keys 111, and also reduces the axial adjustment resistance between the connection shaft 101 and the first mandrel 11 to some extent. While maintaining the steering wheel adjustment feel, it makes it easy to adjust the axial position of the steering wheel.

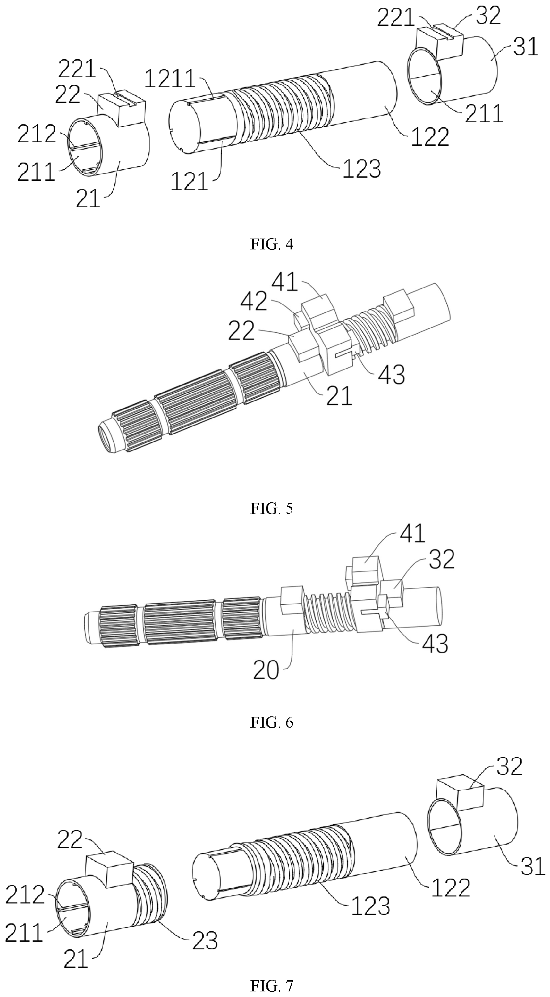

With reference to FIG. 3 and FIG. 4, the shaft body 10 includes a second mandrel 12. The second mandrel 12 is used for installing the functional assembly. The second mandrel 12 includes a first functional section 121, a second functional section 122, and a transmission section 123. The transmission section 123 is located between the first functional section 121 and the second functional section 122. One end of the first functional section 121 is connected to the first mandrel 11, and the other end is connected to the transmission section 123. The end of the transmission section 123 away from the first functional section 121 is connected to the second functional section 122. The first limiting member 20 is mounted on the first functional section 121. The second limiting member 30 is mounted on the second functional section 122. The axial moving portion 40 is mounted on the transmission section 123.

Optionally, the first functional section 121 is detachably connected to the first mandrel 11. Connection methods such as snap-fit or screw connection can be used to facilitate adjusting the position of the first limiting member 20 relative to the first functional section 121.

Optionally, the first functional section 121 and the first mandrel 11 are integrally formed.

In one embodiment of the present application, with reference to FIG. 3 and FIG. 4, the first limiting member 20 includes a first adjusting member 21 and a first clamping member 22. The first adjusting member 21 is provided with an adjustment slot 211 along the axial direction. The adjustment slot 211 is cooperatively arranged with the first functional section 121. At least a part of the first functional section 121 is disposed in the adjustment slot 211. The first clamping member 22 is located on the radially outermost surface of the first adjusting member 21. The first clamping member 22 is used to cooperate with the axial moving portion 40 to restrict the rotation of the shaft body 10.

For example, an inner wall of the adjustment slot 211 is provided with threads. The radially outermost surface of the first functional section 121 is provided with threads that cooperate with the adjustment slot 211. The first adjusting member 21 and the first functional section 121 are connected by screw connection. The position of the first adjusting member 21 relative to the first functional section 121 can be adjusted through thread engagement, thereby adjusting the circumferential or axial position of the first clamping member 22, to adjust the travel of the axial movement of the axial moving portion 40.

In this example, by rotating the first adjusting member 21, the first adjusting member 21 can have a small amount of rotation relative to the first functional section 121, causing the first clamping member 22 to have a slight deflection in the circumferential position relative to the first functional section 121. This allows fine-tuning of the rotation angle of the shaft body 10 and the steering wheel, compensating for incomplete steering wheel turns caused by manufacturing errors. When the follower portion and/or the axial moving portion 40 experience wear or misalignment after prolonged use, it can also serve an adjustment and maintenance function. Compared to the prior art where the entire steering system needs to be replaced, this reduces maintenance costs.

Alternatively, the first adjusting member 21 can be rotated significantly, so that the first adjustment member 21 has a relatively large rotation amount relative to the first function section 121. This allows adjustment of the number of steering wheel turns to meet requirements of different vehicle models and operating conditions. The adjustment operation is simple.

As shown in FIG. 5, when the shaft body 10 rotates with the steering wheel, the first limiting member 20 rotates synchronously with the shaft body 10. The circumferential position of the second clamping member 32 continuously changes during rotation. Meanwhile, the axial moving portion 40 moves axially relative to the shaft body 10 until it contacts the first clamping member 22. At this point, the axial moving portion 40 acts as a stop for the first clamping member 22, preventing the shaft body 10 from continuing to rotate in the same direction. The steering wheel rotates to the first limit position.

For example, as shown in FIG. 4, a positioning rib 212 protrudes from one of the inner wall of the adjustment slot 211 and the radially outermost surface of the first functional section 121, and a positioning groove 1211 is provided on the other. The positioning rib 212 protrudes radially and extends axially. The positioning groove 1211 cooperates with the positioning rib 212, allowing the first adjusting member 21 to be mounted on the first functional section 121. The first adjusting member 21 can slide on the first functional section 121 via the positioning rib 212 to adjust the axial position of the first clamping member 22. With this arrangement, by adjusting the axial position of the first adjusting member 21, the travel of the axial moving portion 40 can be adjusted, thereby adjusting the number of steering wheel turns.

When it is necessary to adjust the axial position of the first clamping member 22, simply change the position of the first adjusting member 21 relative to the first functional section 121 through the cooperation of the positioning rib 212 and the positioning groove 1211. When it is necessary to adjust the circumferential position of the first clamping member 22, the first adjusting member 21 only needs to be detached from the first functional section 121, and then the first limiting member 20 is rotated to adjust the angle and position of the first clamping member 22 relative to the first functional section 121. Subsequently, the first limiting member 20 with the adjusted angle is mounted onto the first functional section 121 through the cooperation of the positioning rib 212 and the positioning groove 1211. This enables adjustment of the circumferential position of the first clamping member 22, thereby adjusting the number of steering wheel turns. The operation is simple and convenient.

For example, with reference to FIG. 1 and FIG. 4, an adjustment gap 113 is disposed at the connection between the first mandrel 11 and the first functional section 121. The axial orthographic projection of the positioning rib 212 coincides with the axial orthographic projection of the connection key 111. When the first adjusting member 21 slides relative to the first functional section 121 through the cooperation of the positioning rib 212 and the positioning groove 1211, or when its position is adjusted axially via screw connection, the adjustment gap 113 allows the first adjusting member 21 to have an axial adjustment amount, enabling position adjustment of the first limiting member 20. It may be understood that the number and position of the positioning ribs 212 can be adjusted according to actual needs.

Optionally, the adjustment gap 113 is disposed on a side of the first mandrel 11 close to the first functional section 121, and the adjustment gap 113 is adjacent to the connection key 111 closest to the first functional section 121. The first mandrel 11 includes at least a shaft segment with the same radial dimension as the first functional section 121, to allow the possibility of adjusting the first adjusting member 21 towards the side of the first mandrel 11.

For example, the adjustment slot 211 at least axially penetrates an end of the first adjusting member 21 close to the first functional section 121.

For example, the adjustment slot 211 is configured as a through slot. The first clamping member 22 can be located at a middle or a non-middle position of the first adjusting member 21 in the axial direction. When the first clamping member 22 is located at a non-middle position axially, the position of the first clamping member 22 relative to the axial moving portion 40 can be adjusted by changing the installation direction of the first limiting member 20 on the first functional section 121, thereby adjusting the number of steering wheel turns. Disassembly and assembly are simple and convenient. By adjusting the axial length dimension of the first adjusting member 21 and the distance by which the first clamping member 22 deviates from the middle position of the first adjusting member 21, quick disassembly/assembly and adjustment of the steering wheel turns can be achieved, improving replacement and adjustment efficiency.

For example, the first clamping member 22 and the first adjusting member 21 are integrally formed.

For example, the positioning rib 212 is integrally formed with an inner wall of the adjustment slot 211 or a radially outermost surface of the first functional section 121.

For example, the axial dimension of the first adjusting member 21 is smaller than the axial dimension of the first functional section 121. With this arrangement, the first functional section 121 can provide movement space for the axial adjustment of the first adjusting member 21, allowing the first adjusting member 21 to have a certain adjustment amount to meet adjustment requirements.

In one embodiment of the present application, the first adjusting member 21 and the first functional section 121 are integrally formed, and the first clamping member 22 and the first adjusting member 21 are integrally formed. That is, the first clamping member 22 can be directly integrally formed with the first functional section 121. With this arrangement, the position of the first limiting member 20 is fixed on the first functional section 121 and is not adjustable. This provides good stability and firmness, saves assembly steps. In this case, the position of the second limiting member 30 relative to the second functional section 122 is adjustable.

In one embodiment of the present application, as shown in FIG. 7, the radial dimension of the transmission section 123 is larger than the radial dimension of the first functional section 121. The first limiting member 20 further includes a mating part 23. The mating part 23 includes a through hole that cooperates with the first functional section 121. The through hole communicates with the adjustment slot 211. The mating part 23 is sleeved on the first functional section 121 via the through hole. The radially outermost surface of the mating part 23 is provided with threads that cooperate with the transmission section 123, and the radial dimension of the mating part 23 is the same as the radial dimension of the transmission section 123. The mating part 23 can extend the transmission section 123, allowing the axial moving portion 40 to have a larger axial travel to cooperate with the position of the first clamping member 22, achieving restriction and adjustment of the steering wheel turns.

For example, the mating part 23 and the first adjusting member 21 are integrally formed.

As shown in FIG. 4, the second limiting member 30 includes a second adjusting member 31 and a second clamping member 32. The second adjusting member 31 is provided with an adjustment slot 211 along the axial direction. In this case, the adjustment slot 211 is cooperatively arranged with the second functional section 122. The second functional section 122 is at least partially mounted in the adjustment slot 211. The second clamping member 32 is located on the radially outermost surface of the second adjusting member 31. The second clamping member 32 is configured to cooperate with the axial moving portion 40 to restrict the rotation of the shaft body 10.

It may be understood that the inner wall of the adjustment slot 211 of the second adjusting member 31 is provided with threads that cooperate with the second functional section 122. The second adjusting member 31 and the second functional section 122 are connected by screw connection. Alternatively, a positioning rib 212 protrudes from one of the inner wall of the adjustment slot 211 of the second adjusting member 31 and the radially outermost surface of the second functional section 122, and a positioning groove 1211 is provided on the other. Its configuration is the same as that of the first limiting member 20 and will not be elaborated here.

For example, when the inner wall of the adjustment slot 211 of the first limiting member 20 is provided with threads, the inner wall of the adjustment slot 211 of the second limiting member 30 can be provided with threads, or can be provided with a positioning rib 212 or a positioning groove 1211. When the inner wall of the adjustment slot 211 of the second limiting member 20 is provided with a positioning rib 212 or a positioning groove 1211, the inner wall of the adjustment slot 211 of the second limiting member 30 can be provided with threads, or can be provided with a positioning rib 212 or a positioning groove 1211.

When the adjustment slots 211 of the first limiting member 20 and the second limiting member 30 have the same connecting structure as the second mandrel 12, the processing efficiency is higher, which helps reduce costs. Also, the consistency of adjustment operations is good, reducing the complexity and difficulty of adjustment.

When the adjustment slots 211 of the first limiting member 20 and the second limiting member 30 have different connecting structures from the second mandrel 12, different adjustment methods can be available, providing greater flexibility. Fine adjustment can be achieved through the first limiting member 20, and large-scale adjustment can be achieved through the second limiting member 30, resulting in stronger applicability.

For example, one end of the second limiting member 30 close to the transmission section 123 is provided with a mating part 23.

As shown in FIG. 5, the axial moving portion 40 includes a connection seat 41, a first blocking member 42, and a second blocking member 43. The connection seat 41 is mounted on the transmission section 123 and is movably connected to the transmission section 123. The connection seat 41 can move axially relative to the transmission section 123. The first blocking member 42 and the second blocking member 43 are mounted at the two axial ends of the connection seat 41. The first blocking member 42 is located at the end of the connection seat 41 close to the first limiting member 20, and the first blocking member 42 cooperates with the first limiting member 20 to restrict the rotation of the first limiting member 20. The second blocking member 43 is located at the end of the connection seat 41 close to the second limiting member 30, and the second blocking member 43 cooperates with the second limiting member 30 to restrict the rotation of the second limiting member 30.

For example, the first blocking member 42, the second blocking member 43, and the connection seat 41 are integrally formed.

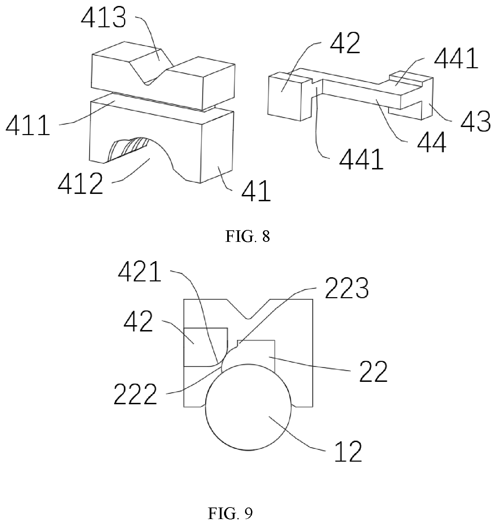

In one embodiment of the present application, as shown in accompanying FIG. 8, the axial moving portion 40 further includes a reinforcement member 44. The first blocking member 42 and the second blocking member 43 are connected through the reinforcement member 44. The connection seat 41 is provided with a mounting slot 411 that cooperates with the reinforcement member 44. The mounting slot 411 penetrates the surface of the connection seat 41 close to the first limiting member 20 or the second limiting member 30. The reinforcement member 44 is disposed in the mounting slot 411. The first blocking member 42 and the second blocking member 43 are exposed outside the mounting slot 411 and protrude beyond the two axial end surfaces of the connection seat 41. The reinforcement member 44 is configured to extend along the direction of force applied to the first blocking member 42 and the second blocking member 43 when the steering wheel rotates to the limit position. This arrangement can increase the structural strength of the first blocking member 42 and the second blocking member 43, preventing the first blocking member 42 or the second blocking member 43 from detaching due to long-term engagement with the first limiting member 20 and the second limiting member 30, thereby extending service life.

Since the first blocking member 42 and the second blocking member 43 need to restrict the rotation of the first limiting member 20 and the second limiting member 30 in the circumferential direction, during the rotation of the shaft body 10, the first clamping member 22 will apply a force tangential to the movement trajectory of the first clamping member 22 to the first blocking member 42, with the tangent point located at the contact position between the first clamping member 22 and the first blocking member 42. The second clamping member 32 will apply a force tangential to the movement trajectory of the second clamping member 32 to the second blocking member 43, with the tangent point located at the contact position between the second clamping member 32 and the second blocking member 43. By setting the extension direction of the reinforcement member 44 parallel to the direction of force applied to the first blocking member 42 and the second blocking member 43, the strength of the first blocking member 42 and the second blocking member 43 in the force direction can be increased, improving stability and firmness.

For example, the reinforcement member 44 contacts and connects with the axial slot walls of the mounting slot 411. The reinforcement member 44 is provided with first fixing holes. Second fixing holes are provided in the mounting slot 411. The first fixing holes and the second fixing holes cooperate to fix the reinforcement member 44 in the axial direction.

Optionally, both the first fixing holes and the second fixing holes are configured as screw holes. To prevent structural interference, a countersink connected to the first fixing hole can be provided on the reinforcement member 44, so that the head of the bolt sinks into the countersink to avoid the bolt head protruding from the axial surface of the connection seat 41.

By detachably mounting the first blocking member 42 and the second blocking member 43 on the connection seat 41 via the reinforcement member 44, first blocking members 42 and second blocking members 43 of different specifications can be replaced according to actual needs to adjust the mating position of the axial moving portion 40, enabling the axial moving portion 40 to meet the adjustment requirements of the follower portion, resulting in a wider application range.

Optionally, the reinforcement member 44, the first blocking member 42, and the second blocking member 43 are integrally formed.

For example, as shown in FIG. 8, the reinforcement member 44 protrudes with a connection member 441. The connection member 441 is located at the two axial ends of the reinforcement member 44 and extends axially. The reinforcement member 44 is connected to the first blocking member 42 and the second blocking member 43 through the connection member 441.

Optionally, the reinforcement member 44 is provided with a third fixing hole. The third fixing hole penetrates the reinforcement member 44 in the thickness direction. The connection seat 41 is provided with a fourth fixing hole that cooperates with the third fixing hole. The fourth fixing hole communicates with the mounting slot 411. Through the cooperation of the third fixing hole and the fourth fixing hole, fixed connection between the reinforcement member 44 and the connection seat 41 is achieved.

Optionally, the third fixing hole and the fourth fixing hole are configured as screw holes, allowing fixation of the reinforcement member 44 in another direction to increase structural stability.

Optionally, the connection member 441 and the reinforcement member 44 are integrally formed.

Optionally, the thickness dimension of the connection member 441 is smaller than the thickness dimension of the first blocking member 42 or the second blocking member 43.

With reference to FIG. 4 and FIG. 8, the radially outermost surface of the transmission section 123 is provided with threads. An end of the connection seat 41 close to the transmission section 123 is provided with a limiting groove 412. The inner wall of the limiting groove 412 is provided with threads that cooperate with the transmission section 123. Connection by screw engagement enables transmission, converting the axial rotation of the shaft body 10 into axial movement of the connection seat 41. The structure is simple, with high transmission efficiency and fast response speed.

Optionally, the limiting groove 412 is a semi-circular arc groove.

For the connection seat 41 to move axially via screw transmission, there should be at least one component that applies an external force to the connection seat 41, enabling the connection seat 41 to be in close contact with the transmission section 123 in a direction perpendicular to the axial direction. Therefore, the axial moving portion 40 further includes a fixing member 45.

With reference to FIG. 2 and FIG. 3, a housing 50 is sleeved outside the shaft body 10. The housing 50 includes a functional cavity 51. The shaft body 10 is disposed in the functional cavity 51. The end of the connection shaft 101 away from the shaft body 10 protrudes from the functional cavity 51 and is connected to the steering wheel. The housing 50 includes a fixed cavity 52. The fixed cavity 52 communicates with the functional cavity 51, and the functional cavity 51 penetrates a radial side surface of the housing 50. The fixing member 45 is mounted in the fixed cavity 52 and is fixed on the housing 50.

Optionally, the shaft body 10 and the housing 50 are coaxially connected.

As shown in FIG. 8, a guide strip 451 protrudes from one of the connection seat 41 and the fixing member 45, and a guide groove 413 is provided on the other. When the fixing member 45 is connected to the connection seat 41, the guide strip 451 is accommodated in the guide groove 413, and the guide strip 451 cooperates with the guide groove 413, allowing the connection seat 41 to move axially relative to the fixing member 45. The provision of the fixing member 45 can press the connection seat 41 against the shaft body 10, ensuring transmission quality.

Optionally, the guide groove 413 is configured as a V-shaped groove or an arc-shaped groove.

Optionally, the guide strip 451 is integrally formed with the connection seat 41 or the fixing member 45.

As shown in FIG. 1, the axial moving portion 40 further includes a cover 46. The cover 46 is located at an end of the fixing member 45 away from the connection seat 41, and the cover 46 is connected to the housing 50 via a fastener 47. The cover 46 and the fixing member 45 are provided with fastener holes that cooperate with the fastener 47. The fastener 47 passes through the fastener holes and is connected to the housing 50. The shape and size of the fixed cavity 52 can be set so that the housing 50 has a position for connection with the fastener 47 at the fixed cavity 52. Details are not described in this example.

Optionally, the fastener 47 is configured as a bolt, and the fastener holes are configured as screw holes, facilitating disassembly/assembly and subsequent maintenance, reducing production and maintenance costs.

Optionally, two fasteners 47 are provided, arranged axially on both sides of the cover 46.

Exemplarily, as shown in FIG. 1, the axial moving portion 40 further includes an elastic member 48. The elastic member 48 is disposed between the cover 46 and the fixing member 45. The elastic member 48 can apply a force toward the connection seat 41 to the fixing member 45, cooperating with the fixing member 45 to make the connection seat 41 tightly contact the transmission section 123, thereby improving the transmission efficiency between the connection seat 41 and the transmission section 123.

The fastener 47 passes through the elastic member 48 and connects to the fixing member 45. When the cover 46 and the fixing member 45 are fixed via the fastener 47, the fastener 47 can cause the elastic member 48 to undergo elastic deformation, thereby enabling the elastic member 48 to exert force on the fixing member 45.

Optionally, the elastic member 48 is a cylindrical spring or a disc spring.

Exemplarily, as shown in FIG. 1, an end of the fastener 47 passes through the fixing member 45 and contacts at least one of the first clamping member 22 and the second clamping member 32. When the shaft body 10 completes one axial rotation driven by the steering wheel, the end of the fastener 47 contacts the first clamping member 22 and/or the second clamping member 32, generating a certain damping force. This increases the resistance of the steering wheel rotation compared to other positions, serving to remind the user that the steering wheel has completed one rotation. Especially for some novice drivers, this provides a good reminder effect, reducing the operational difficulty of the steering wheel.

Exemplarily, as shown in FIG. 4, a sliding slot 221 is provided on the first clamping member 22 and/or the second clamping member 32. The end of the fastener 47 is disposed within the sliding slot 221. This configuration allows adjustment of the damping force for one steering wheel rotation by varying the engagement amount of the fastener 47 relative to the sliding slot 221.

Optionally, the sliding slot 221 is configured as an arcuate groove.

In one embodiment of the present application, as shown in FIG. 9, one end of the first clamping member 22 and the second clamping member 32 is provided with a first arcuate member 222 and a side stop 223. The side stop 223 is located at one end of the first arcuate member 222 away from the first blocking member 42 and the second blocking member 43. One end of the first blocking member 42 and the second blocking member 43 is provided with a second arcuate member 421 that cooperates with the first arcuate member 222. The first arcuate member 222 and the second arcuate member 421 protrude toward sides facing each other, or, one of the first arcuate member 222 and the second arcuate member 421 protrudes toward the side facing each other, while the other is concave toward the side facing each other.

When the steering wheel rotates to the limit position, the first arcuate member 222 and the second arcuate member 421 gradually contact. In this case, the resistance to steering wheel rotation increases, reminding the driver that the steering wheel is about to reach its limit position, thereby improving the tactile feel during use.

It may be understood that if one of the first arcuate member 222 and the second arcuate member 421 protrudes toward one side that is close to each other, and the other is concave toward one side that is close to each other, then the side stop 223 is not mandatory.

Using the steering system assembly with adjustable steering wheel turns of the present application, the functional assembly cooperates with the shaft body 10 to limit the rotation of the shaft body 10, thereby serving to limit the number of turns of the steering wheel connected to the shaft body 10.

The functional assembly includes a follower portion and an axial moving portion 40. The follower portion rotates synchronously with the shaft body 10. The axial moving portion 40 cooperates with the shaft body 10 to move axially relative to the shaft body 10. When the axial moving portion 40 moves to cooperate with the follower portion, it can circumferentially limit the follower portion, preventing the follower portion from continuing to rotate in the same direction with the shaft body 10, thereby limiting the steering wheel. In this case, the steering wheel has rotated to its limit position. Through the cooperation of mechanical structures, the rotation of the shaft body 10 is ingeniously utilized to achieve the cooperative relationship between the follower portion and the axial moving portion 40. The structure is simple, does not occupy excessive space, and is conducive to layout.

The position of the follower portion is adjustable in the axial and/or circumferential direction, allowing the number of shaft body 10 rotations to be changed when the follower portion cooperates with the axial moving portion 40, thereby serving to adjust the number of steering wheel turns. This can be adapted to different vehicle models and steering wheel requirements. The adjustment operation is simple, offering good applicability.

The above descriptions are merely specific embodiments of the present application. However, the protection scope of the present application is not limited thereto. Any person skilled in the art can easily conceive of changes or substitutions within the technical scope disclosed in the present application, which should be covered within the protection scope of the present application.

## Claims

1. A steering system assembly with adjustable steering wheel turns, **characterized by** comprising a shaft body (10) and a functional assembly mounted on the shaft body (10), wherein the shaft body (10) is configured to connect to a steering wheel and rotate synchronously with the steering wheel about an axial direction, the functional assembly comprises a follower portion and an axial moving portion (40) connected to the shaft body (10), the follower portion protrudes from an outermost radial surface of the shaft body (10) and rotates synchronously with the shaft body (10) about the axial direction, the position of the follower portion is adjustable in at least one of the axial direction and the circumferential direction, the axial moving portion (40) is configured such that in a case that the shaft body (10) rotates about the axial direction, the axial moving portion (40) moves axially toward or away from the follower portion, the axial moving portion (40) has a mating position relative to the shaft body (10), and in a case that the axial moving portion (40) moves to the mating position, the axial moving portion (40) cooperates with the follower portion to prevent the shaft body (10) from continuing to rotate in a rotation direction.

2. The steering system assembly with adjustable steering wheel turns according to claim 1, wherein the follower portion comprises a first limiting member (20) and a second limiting member (30), the first limiting member (20) and the second limiting member (30) are mounted on the shaft body (10) at axial intervals, at least one of the first limiting member (20) and the second limiting member (30) is configured to be movably connected to the shaft body (10), so that the position of at least one of the first limiting member (20) and the second limiting member (30) is adjustable relative to the shaft body (10), and the axial moving portion (40) is located between the first limiting member (20) and the second limiting member (30).

3. The steering system assembly with adjustable steering wheel turns according to claim 2, wherein the shaft body (10) comprises a second mandrel (12), the second mandrel (12) comprises a first functional section (121), a second functional section (122), and a transmission section (123), the transmission section (123) is located between the first functional section (121) and the second functional section (122) and is axially connected to the first functional section (121) and the second functional section (122), the first limiting member (20) is mounted on the first functional section (121), the second limiting member (30) is mounted on the second functional section (122), and the axial moving portion (40) is mounted on the transmission section (123).

4. The steering system assembly with adjustable steering wheel turns according to claim 3, wherein the first limiting member (20) comprises a first adjusting member (21) and a first clamping member (22), the first adjusting member (21) is axially provided with an adjustment slot (211), the first functional section (121) is at least partially disposed in the adjustment slot (211), and the first clamping member (22) is located on an outermost radial surface of the first adjusting member (21).

5. The steering system assembly with adjustable steering wheel turns according to claim 4, wherein an inner wall of the adjustment slot (211) is provided with threads, an outermost radial surface of the first functional section (121) is provided with threads cooperating with the adjustment slot (211), and the first adjusting member (21) is threadedly connected to the first functional section (121).

6. The steering system assembly with adjustable steering wheel turns according to claim 4, wherein one of the inner wall of the adjustment slot (211) and the outermost radial surface of the first functional section (121) is provided with a protruding positioning rib (212), and the other is provided with a positioning groove (1211), and the positioning rib (1211) is disposed in the positioning groove (1211).

7. The steering system assembly with adjustable steering wheel turns according to claim 5 or 6, wherein the second limiting member (30) comprises a second adjusting member (31) and a second clamping member (32), the second adjusting member (31) is axially provided with an adjustment slot (211) cooperating with the second functional section (122), the second functional section (122) is at least partially disposed in the adjustment slot (211), the second clamping member (32) is located on an outermost radial surface of the second adjusting member (31), the adjustment slot (211) of the second adjusting member (31) is threadedly connected to the second functional section (122), or, one of the inner wall of the adjustment slot (211) of the second adjusting member (31) and an outermost radial surface of the second functional section (122) is provided with a protruding positioning rib (212), and the other is provided with a positioning groove (1211).

8. The steering system assembly with adjustable steering wheel turns according to any one of claims 3 to 7, wherein the axial moving portion (40) comprises a connection seat (41), a first blocking member (42), and a second blocking member (43), the connection seat (41) is movably connected to the transmission section (123) and the connection seat (41) move axially relative to the transmission section (123), the first blocking member (42) is located at an end of the connection seat (41) near the first limiting member (20), and the second blocking member (43) is located at an end of the connection seat (41) near the second limiting member (30).

9. The steering system assembly with adjustable steering wheel turns according to claim 8, wherein the axial moving portion (40) comprises a reinforcement member (44), the first blocking member (42) and the second blocking member (43) are connected by the reinforcement member (44), the connection seat (41) is provided with a mounting slot (411) cooperating with the reinforcement member (44), the reinforcement member (44) is detachably disposed in the mounting slot (411), and the first blocking member (42) and the second blocking member (43) are exposed outside the mounting slot (411) and protrude beyond the two axial ends of the connection seat (41).

10. The steering system assembly with adjustable steering wheel turns according to claim 8 or 9, wherein an outer surface of the shaft body (10) is sleeved with a housing (50), the housing (50) comprises a functional cavity (51) and a fixed cavity (52), the shaft body (10) is disposed in the functional cavity (51), the fixed cavity (52) communicates with the functional cavity (51) and the fixed cavity (52) penetrates a radial side surface of the housing (50), the axial moving portion (40) comprises a fixing member (45) located in the fixed cavity (52), the fixing member (45) is connected to the housing (50), the connection seat (41) is capable of moving axially relative to the fixing member (45), and the fixing member (45) is configured to make the connection seat (41) contact with the transmission section (123).

11. The steering system assembly with adjustable steering wheel turns according to claim 10, wherein the axial moving portion (40) further comprises a cover (46) and a fastener (47), the cover (46) is located at an end of the fixing member (45) away from the connection seat (41), and the cover (46) and the fixing member (45) are provided with fastener holes cooperating with the fastener (47).

12. The steering system assembly with adjustable steering wheel turns according to claim 11, wherein an end of the fastener (47) extends out of the fixing member (45) and contacts at least one of the first clamping member (22) and the second clamping member (32) of the follower portion.
